# EUROPÄISCHE PATENTANMELDUNG

(11) **EP 1 285 856 A2**
(43) Veröffentlichungstag der Anmeldung: **26.02.2003**
(21) Anmeldenummer: 02009539.4
(22) Anmeldetag: 26.04.2002
(51) Int. Cl.: B65D 19/12, B65D 19/44

(54) **Vorrichtung zur Lagerung und zum Transport von Platten**

(30) Priorität: 11.08.2001 DE 20113396 U
(71) Anmelder: WEHA- LUDWIG WERWEIN GMBH, D-86343 Königsbrunn (DE)
(72) Erfinder: Aigner, Kurt, 86343 Königsbrunn (DE)
(74) Vertreter: Rapp, Bertram, Dr.

(57) **Zusammenfassung**

Die Erfindung betrifft eine Vorrichtung zur Lagerung und zum Transport von flachen Bauteilen, insbesondere Platten, mit einem Bodenrahmen (1) und einem Stützrahmen (2), wobei Bodenrahmen (1) und Stützrahmen (2) jeweils aus mehreren, miteinander verschweißten Metallrohren gefertigt sind, der Bodenrahmen (1) im betriebsbereiten Zustand parallel zum Untergrund angeordnet ist und der Stützrahmen (2) im wesentlichen senkrecht zum Bodenrahmen (1) nach oben ragt. Bekannte derartige Vorrichtungen sind äußerst sperrig zu transportieren.

Die Aufgabe, eine gattungsgemäße Vorrichtung so weiterzubilden, daß die für ihren eigenen Transport entstehenden Kosten erheblich verringert werden, wird dadurch gelöst, daß der Stützrahmen (2) mit dem Bodenrahmen (1) über Schraubverbindungen (9) - vorzugsweise Schlüssellochverbindungen - lösbar verbindbar ausgebildet ist und der Stützrahmen (2) im vom Bodenrahmen (1) gelösten Zustand im wesentlichen flach auf den Bodenrahmen (1) auflegbar ist.

## Beschreibung

Die Erfindung betrifft eine Vorrichtung zur Lagerung und zum Transport von flachen Bauteilen, insbesondere Platten, nach dem Oberbegriff des Anspruchs 1.

Zum Transport von flachen Bauteilen, beispielsweise Platten zum Innenausbau, insbesondere jedoch zum Transport von schweren Platten wie Küchenplatten aus Granit, sind Transportund Lagergeräte bekannt, die einen Bodenrahmen und einen hierzu im wesentlichen senkrecht angeordneten Stützrahmen aufweisen, wobei beide Rahmen jeweils aus mehreren, miteinander verschweißten Metallrohren gefertigt sind. Der Bodenrahmen liegt hierbei parallel zum Untergrund und trägt die zu lagernden bzw. zu transportierenden Platten während der Stützrahmen nahezu senkrecht zum Bodenrahmen, jedoch unter einem geringfügigen Winkel zur Vertikalen angeordnet ist und dazu dient, daß sich die Bodenplatten leicht schräg an ihn abstützen können. Hierbei ist die erste Platte unmittelbar in Kontakt mit dem Stützrahmen während die weiteren Platten zwar auf den Bodenrahmen aufliegen, sich aber gegen die vorherige Platte abstützen. In bevorzugten Ausführungsformen sind die bekannten Stützrahmen mittig zum Bodenrahmen angeordnet, so daß Platten bzw. flache Bauteile von zwei Seiten daran angelehnt werden können.

Nachteilig bei diesen bekannten Vorrichtungen ist, daß sie äußerst sperrig sind. Dies ist zwar während des Betriebs kein Problem, da ja auch die zu lagernden und zu transportierenden Platten groß und sperrig sind, wohl aber während des Transports der Vorrichtungen, insbesondere falls diese per Schiff (natürlich ohne Bestückung mit flachen Bauteilen) über weite Strecken transportiert werden müssen. In diesem Fall ist für die bekannten Vorrichtungen eine erhebliche Menge an Lagerraum vorzusehen, welcher jedoch nur äußerst unzureichend gefüllt werden kann, da die Vorrichtungen nebeneinander angeordnet werden und die der Höhe des Stützrahmens entsprechende Höhe leer bleiben muß. Hierdurch ergeben sich hohe Transportkosten für diese Vorrichtungen.

Es besteht daher die Aufgabe, eine gattungsgemäße Vorrichtung so weiterzubilden, daß die für ihren eigenen Transport entstehenden Kosten erheblich verringert werden.

Gelöst wird diese Aufgabe mit den kennzeichnenden Merkmalen des Anspruchs 1. Vorteilhafte Ausgestaltungen sind den Unteransprüchen entnehmbar.

Ein Ausführungsbeispiel der Erfindung wird im folgenden unter Bezugnahme auf die begleitenden Zeichnungen näher erläutert. Diese zeigen:
- Figur 1:: eine Seitenansicht einer Vorrichtung zur Lagerung und zum Transport von Platten, wobei der Stützrahmen von dem Bodenrahmen getrennt und außerdem ein Transportwagen für die Vorrichtung dargestellt ist;
- Figur 2:: eine Ansicht des in Figur 1 dargestellten Stützrahmens von unten (Ansicht B) mit einem Detail C;
- Figur 3:: eine Ansicht der in Figur 1 dargestellten Vorrichtung von oben; und
- Figur 4:: eine Ansicht der in Figur 1 dargestellten Vorrichtung von der Seite ohne den Transportwagen.

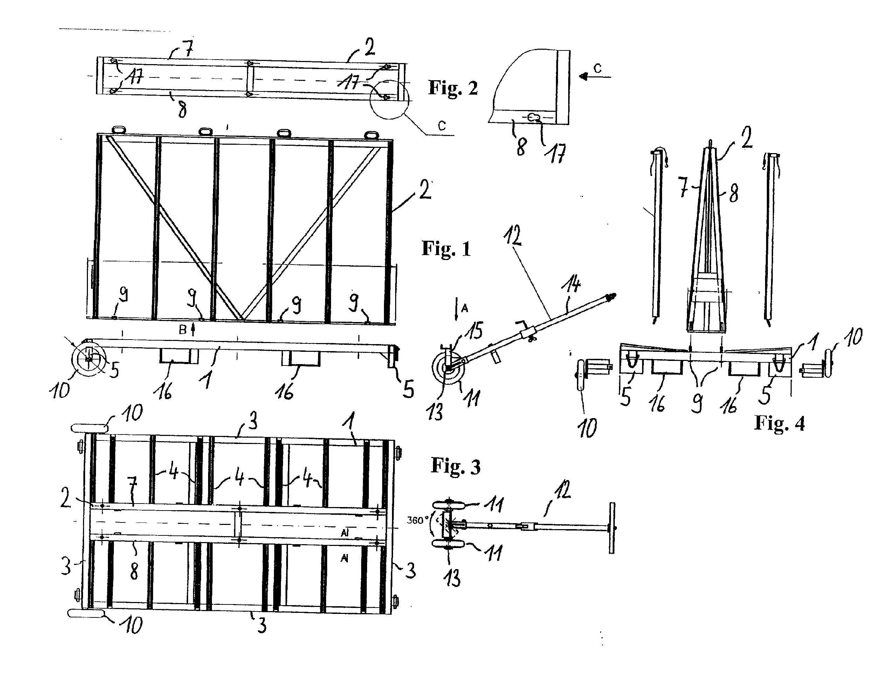

Die in den Figuren 1 bis 4 dargestellte Vorrichtung zur Lagerung und zum Transport von flachen Bauteilen weist einen Bodenrahmen 1 und einen Stützrahmen 2 auf. Der Bodenrahmen 1, der am besten in Figur 3 erkennbar ist, besteht aus vier miteinander rechtwinklig verschweißten Vierkant-Metallrohren 3 und hat daher eine im wesentlichen rechteckige Grundform. Parallel zu zwei begrenzenden Metallrohren 3 sind eine Vielzahl weiterer Metallrohre 4, vorzugsweise ebenfalls in Vierkantausführung mit dem Rahmen aus den Metallrohren 3 verschweißt, um dem Bodenrahmen 1 zusätzliche Stabilität zu verleihen und als Aufnahme für die zu lagernden Platten zu dienen.

An seiner Unterseite weist der Bodenrahmen 5 sowohl Aufnahmetaschen 16 für den Eingriff der Gabeln eines Gabelstaplers auf, und zwar vorzugsweise an beiden Seiten, diese Taschen sind also in Figur 1 und Figur 4 dargestellt. Ferner weist der Bodenrahmen 1 an seiner Unterseite Stützelemente 5 auf, über welche der Bodenrahmen auf dem Untergrund aufliegt. Diese Stützelemente 5 sind vorzugsweise an der Unterseite des Bodenrahmens 1 angeschweißt.

Im dargestellten Ausführungsbeispiel weisen zwei der Stützelemente 5 darüber hinaus Rollen 10 auf, über die der Bodenrahmen 1 auf den Boden aufliegt und verfahren werden kann. Es handelt sich allerdings nur um zwei koaxiale Rollen 10, während an den gegenüberliegenden Stützelementen 5 keine Rollen angeordnet sind. Diese einseitige Anordnung wird später bei der Beschreibung des Transportwagens 12 näher beschrieben werden.

Der Stützrahmen 2 ist aus der Seitenansicht gemäß Figur 1 ebenfalls im wesentlichen rechteckig ausgebildet und besteht aus miteinander verschweißten Vierkant-Metallrohren. Wie aus Figur 4 ersichtlich ist, handelt es sich jedoch nicht nur um ein ebenes Netzwerk von Platten, sondern um eine Anordnung aus zwei Einzelrahmen 7 und 8, welche die beiden Seiten des Stützrahmens 2 bilden und an ihren Oberkanten miteinander verbunden, beispielsweise verschweißt, sind. Der Winkel zwischen den beiden Seiten 7 und 8 ist spitz und beträgt im dargestellten Ausführungsbeispiel etwa 10°. Der Stützrahmen 2 ist mit dem geöffneten Winkel nach unten auf den Bodenrahmen 1 hin angeordnet, und zwar mittig zum Bodenrahmen 1, wie es in Figur 3 dargestellt ist. An den unteren, parallel zum Bodenrahmen 1 verlaufenden Rohren beider Seiten 7 und 8 weist der Stützrahmen 2 Schlüssellochverbindungen 17 auf, welche zu entsprechenden Bohrungen in Rohren des Bodenrahmens, beispielsweise den Rohren 4, fluchten. Hierdurch kann der Stützrahmen 2 über Schraubverbindungen 9 mit dem Bodenrahmen 1 verbunden werden. Vorzugsweise handelt es sich bei den Bohrungen 17 um Schlüssellochbohrungen, um die Stabilität der Anordnung aus Bodenrahmen 1 und Stützrahmen 2 im zusammengeschraubten Zustand zu erhöhen.

Bei einer besonderen Ausgestaltung der Vorrichtung weist diese außerdem einen Transportwagen 12 auf, bei dem zwei Rollen 11 koaxial zueinander auf einer Achse 13 gelagert sind. Diese Achse 13 ist auch der Knickpunkt zweier Hebelarme 14 und 15, wobei der längere Hebelarm 14 als teleskopisch verfahrbarer und damit in der Länge verstellbarer Griff dient und der kürzere Hebelarm 15 (zum längeren Arm in einem Winkel von etwa 80° angeordnet) eine Aufnahme für den Bodenrahmen 1 bildet. Diese Aufnahme 15 ist vorzugsweise so ausgebildet, daß sie genau unter ein Stützelement 5 paßt, kann jedoch auch lediglich das Rohr des Bodenrahmens 1 aufnehmen.

### Die Vorrichtung funktioniert wie folgt:

Zum Transport der Vorrichtung selbst, beispielsweise im Schiff über längere Strecken, wird der Stützrahmen 2 von dem Bodenrahmen 1 gelöst (oder gar nicht erst aufgeschraubt) und parallel zum Bodenrahmen 1 auf diesen aufgelegt. Zusätzlich kann der Stützrahmen 2 über (nicht dargestellte) Verbindungselemente mit dem Bodenrahmen 1 verbunden und fixiert werden. Der Transportwagen 12 wird gegebenenfalls in geeigneter Weise in die Anordnung aus Stützrahmen 2 und Bodenrahmen 1 mit eingebunden.

Auf diese Weise entstehen flache Pakete, die bei guter Raumausnutzung transportiert werden können. Es wird lediglich etwa 1/4 bis 1/5 des Raumbedarfes benötigt, um die Vorrichtungen zu transportieren.

Nachdem die Vorrichtungen am Ziel angekommen sind, werden sie einfach zusammengebaut, indem der Stützrahmen 2 senkrecht gestellt und über Schraubverbindungen 9 mit den Schlüssellöchern 17 an der Bohrungen des Bodenrahmens 1 befestigt wird.

In der Ausführungsform mit Rollen 5 bzw. 11 weist der Bodenrahmen 1 nur an einer Seite Rollen 5 auf, wie es in Figur 1 dargestellt ist. An der gegenüberliegenden Seite weist der Bodenrahmen 1 lediglich Stützelemente 5 auf, um sich gegen den Untergrund abzustützen. In diesem Fall ruht die gesamte Vorrichtungen sicher auf dem Untergrund, da sie auf den lediglich zwei Rollen 11 nicht fahren kann. Zum Transport der gesamten Vorrichtung, gegebenenfalls mit darauf gelagerten Platten, wird der Transportwagen 12 eingesetzt, und zwar bei im wesentlichen senkrecht nach oben stehendem Griff 14 mit dem Ansatz 15 unter die Bodenplatte 1 geschoben, so daß der Ansatz 15 das Metallrohr 3 bzw. ein Stützelement 5 untergreift. Anschießend wird unter Ausnutzung des Hebeleffekts der Griff 14 nach unten gedrückt, wodurch sich der Ansatz 15 nach oben hebt und die gesamte Vorrichtung um die Achse 13, welche auch die Rollen 11 lagert, angehoben wird. Anschließend kann die Vorrichtung über die Rollen 11 und 10 an den gewünschten Ort gebracht werden. Das Absetzen des Transportwagens 12 von dem Bodenrahmen 1 erfolgt in umgekehrter Reihenfolge.

## Patentansprüche

1. Vorrichtung zur Lagerung und zum Transport von flachen Bauteilen, insbesondere Platten, mit einem Bodenrahmen (1) und einem Stützrahmen (2), wobei Bodenrahmen (1) und Stützrahmen (2) jeweils aus mehreren, miteinander verschweißten Metallrohren gefertigt sind, der Bodenrahmen (1) im betriebsbereiten Zustand parallel zum Untergrund angeordnet ist und der Stützrahmen (2) im wesentlichen senkrecht zum Bodenrahmen (1) nach oben ragt, **dadurch gekennzeichnet, daß** der Stützrahmen (2) mit dem Bodenrahmen (1) über Schraubverbindungen (9) - vorzugsweise Schlüssellochverbindungen - lösbar verbindbar ausgebildet ist und der Stützrahmen (2) im vom Bodenrahmen (1) gelösten Zustand im wesentlichen flach auf den Bodenrahmen (1) auflegbar ist.

2. Vorrichtung nach Anspruch 1, **dadurch gekennzeichnet, daß** der Bodenrahmen (1) und/oder der Stützrahmen (2) aus miteinander verschweißten Vierkantrohren gefertigt sind.

3. Vorrichtung nach einem der voranstehenden Ansprüche, **dadurch gekennzeichnet, daß** der Bodenrahmen (1) - von oben gesehen - im wesentlichen rechteckig ausgebildet ist, jede Seite von einem Metallrohr (3) gebildet wird und parallel zu mindestens zwei Seiten im Inneren des Rechtecks weitere Metallrohre (4) angeordnet sind.

4. Vorrichtung nach einem der voranstehenden Ansprüche, **dadurch gekennzeichnet, daß** der Bodenrahmen (1) an seiner dem Untergrund zugewandten Seite Stützelemente (5), insbesondere in Form von unten angeschweißten Vierkantrohren, aufweist.

5. Vorrichtung nach Anspruch 4, **dadurch gekennzeichnet, daß** die Stützelemente (5) an ihrer dem Untergrund zugewandten Unterseite Laufrollen (10) aufweisen.

6. Vorrichtung nach einem der voranstehenden Ansprüche, **dadurch gekennzeichnet, daß** der Stützrahmen (2) in der Mitte des Bodenrahmens (1), parallel zu einer seiner Seiten, auf diesen aufschraubbar ist.

7. Vorrichtung nach Anspruch 6, **dadurch gekennzeichnet, daß** der Stützrahmen (2) zweigeteilt ausgebildet ist und beide Seiten (7, 8) des Stützrahmens (2) in einem spitzen Winkel zueinander angeordnet sind, sich an der Oberseite berühren und auf dem Bodenrahmen (1) im Abstand zueinander aufsetzen.

8. Vorrichtung nach einem der voranstehenden Ansprüche, **dadurch gekennzeichnet, daß** Verriegelungselemente vorgesehen sind, mit denen der Stützrahmen (2) im gelösten Zustand flach auf den Bodenrahmen (1) befestigbar ist.

9. Vorrichtung nach einem der voranstehenden Ansprüche, **dadurch gekennzeichnet, daß** sie einen Transportwagen (12) aufweist, der mindestens zwei auf einer Achse (13) liegende Rollen (11) trägt und im wesentlichen um diese Achse (13) einen zweiarmigen Hebel bildet, dessen längerer Arm den Griff (14) des Transportwagens (12) und dessen kürzeren Arm einen Ansatz (15) zum Untergreifen und Anheben des Bodenrahmens (1) aufweist.

10. Vorrichtung nach Anspruch 9, **dadurch gekennzeichnet, daß** der Griff (14) des Transportwagens (12) teleskopisch längenverstellbar ist.

11. Vorrichtung nach einem der Ansprüche 9 oder 10, **dadurch gekennzeichnet, daß** der kürzere Ansatz (15) des Transportwagens (12) zum Eingriff in mindestens ein Stützelement (5) des Bodenrahmens (1) ausgebildet ist.
